# EUROPEAN PATENT SPECIFICATION

(11) **EP 1 448 493 B1**
(45) Date of publication and mention of the grant of the patent: **03.08.2005**
(21) Application number: 02783839.0
(22) Date of filing: 28.11.2002
(51) Int. Cl.: C04B 7/44, C04B 7/26

(54) **METHOD FOR PRODUCING SLAG WITH HYDRAULIC PROPERTIES**
VERFAHREN ZUR HERSTELLUNG VON SCHLACKE MIT HYDRAULISCHEN EIGENSCHAFTEN
PROCEDE DE PRODUCTION D'UN LAITIER AYANT DES PROPRIETES HYDRAULIQUES

(30) Priority: 29.11.2001 NL 1019453
(43) Date of publication of application: 25.08.2004
(73) Proprietor: ASCEM B.V., 6191 RA Beek (NL)
(72) Inventor: NIEL, Egide, Marie, Mathieu, Gerard, NL-6217 KM Maastricht (NL); CRANSVELD, Joseph, B-4860 Wegnez (BE)
(74) Representative: Dorna, Peter
(86) International application number: PCT/NL2002/000773
(87) International publication number: WO 2003/045870

(56) References cited:
- WO-A-01/46081
- BE-A- 766 032
- DE-A- 2 122 027
- US-A- 4 362 543

## Description

The present invention relates to a method for preparing a slag having hydraulically binding properties on the basis of a mixture comprising limestone, fly ash and any additives, which starting materials or raw materials are mixed, melted and pulverised.

Such a method is known from European patent No 0 393 731, one of the inventors of which is also mentioned as an inventor in the present application. According to the method is that is known therefrom, the raw materials, which are based on CaO, SiO₂ and Al₂O₃, are melted in a vessel at a temperature ranging from 1400 °C to 1550 °C, so that the result is a melt composed of 33-52 wt.% of CaO, 9-25 wt.% of Al₂O₃ and 23-45 wt.% of SiO₂, which melt is cooled after tapping by passing it between the rollers of a roller cooler (calendar) until a temperature of 500-1000 °C is reached, after which the thus solidified mass is broken and further cooled with air, with the heated cooling air being used for further heating of the raw materials. In practice it has become apparent that such a method leads to a vitrified slag having a high CaO content.

Both from Belgian patent application No 766 032 and from German Offenlegungsschrift No 2 122 027 there is known a method for using carbon residues and calcium carbonate, which mixture is heated to a temperature of about of 1300 °C and subsequently baked at a temperature of at least 1500 °C, during which process roasting and sintering occurs. Sintering, however, is a process in which granules fuse at their surfaces, causing them to bond together. This means that in the arrangement as disclosed in the two aforesaid patent publications bonding will take place at or just above the location where the fuel is supplied, which is highly undesirable in practice, causing bonding and clogging of the entire mass of solid materials in the pre-heater already, which is highly undesirable.

In many countries traditional Portland cement is still being produced, the main component of which Portland cement is Portland clinker which is prepared in a shaft furnace. This labour-intensive production process, which hardly complies with the environmental requirements (dust), if at all, and which has limitations as regards the obtained clinker quality, does not hold out much prospects as regards the realisation of adaptations that will lead to improvements or to a higher production. It has now appeared to be possible to adapt the existing infrastructure of the factory, thus making it possible to change over to another production process which likewise provides an inorganic binder for the construction industry which has practically identical properties as regards strength and processing possibilities as Portland cement.

The object of the present invention is to provide a method for preparing a slag having hydraulically binding properties, in which sintering into fist-sized or even larger lumps of the starting materials that have been heated to a high temperature must be prevented as much as possible during the course of the calcination process.

Another object of the present invention is to provide a method for preparing a slag having hydraulically binding properties, in which the starting materials are supplied to a heating furnace in the form of granules having a known composition, which heating furnace prevents sintering of the granules that have already been supplied in the desired specific composition.

Yet another object of the present invention is to provide a method which utilises the existing infrastructure of a clinker production process in which a shaft furnace is used, and which adapts said infrastructure in such a manner that slag is produced instead of clinker, the aim being to achieve a maximum throughput of fired product for the preparation of slag.

Another object of the present invention is to provide a method and apparatus in which no bonding of the granules will take place at the surfaces thereof and so-called point contacts will occur between the slowly moving granules, as a result of which undesirable clogging of the mass is practically excluded.

The present invention as referred to in the introduction is the subject-matter of independent claim 1; preferred features are the subject-matter of dependent claims 2 - 12 characterized in that the method comprises the following steps:
i) mixing the starting materials, viz. limestone, fly ash and any additives, in the desired weight ratio,
ii) granulating the mixture from step i), whilst adding a solid fuel,
iii) supplying the granules from step ii) at the upper side of a cylindrical, vertical heat exchanger,
iv) supplying the fired product obtained at the bottom side of said cylindrical vertical heat exchanger to a melting furnace so as to obtain a melted product,
v) quenching the melted product obtained in step iv) so as to obtain the slag having hydraulically binding properties, and subsequently
vi) pulverising the slag obtained in step v) and mixing it with fly ash and any additives, preferably an activator, so as to obtain a binder.

By carrying out the present method in this manner, a slag having hydraulically binding properties is obtained, which, after pulverisation and mixing with fly ash and any additives, preferably an activator, yields a binder which is used as cement. The present invention is in particular suitable for use in the modification of shaft furnaces of cement factories.

An amount of granules already comprising a solid fuel, for example coal or fly ash having a high carbon content, is supplied to the heat exchanger, the composition of each of which granules is already in accordance with the desired specification, so that a slag having the correct chemical composition is obtained at the outlet of the melting furnace. In specific embodiments it is desirable to use starting materials that have been pulverised in accordance with step i). As a result of the presence of solid fuel in the granules, an intense homogeneous reaction will take place in the granule, in which sintering effects take place only within the granules, so that there will be hardly any bonding at the surfaces thereof, which external bonding might even result in clogging of the mass. Since the granules have been fully decarbonated in the cylindrical vertical heat exchanger, the temperature of the melt is locally not adversely affected by an energy-consuming decarbonisation process. In addition, the granules cause hardly any separation in the melting furnace. Although limestone is consistently mentioned as the starting material herein, it will be apparent to those skilled in the art that besides limestone also industrial waste having a high CaO content, such as Ca(OH)₂ or CaO residues, can be used in step i) of the present method.

After pulverisation, the slag is finally mixed with a substantially identical amount of fly ash to obtain a binder as the final product. The present method has several advantages compared to the clinker production processes according to the prior art. Since the slag is of a high quality, unprocessed fly ash can be added in an amount of up to the own weight of the slag (slag : fly ash = 50 : 50). As a result, the production costs and the energy costs for the present final product are reduced to a level below that of common Portland cement. In addition to that, a significant reduction of the use of limestone per unit of final product is achieved. This leads to a strongly reduced CO₂ emission (a reduction by more than 50%). Another advantage is the fact that the final product can be produced from coal fly ash as an alternative raw material in an amount of up to 70%.

The term additives is understood to include agents such as binders, filiers and correcting agents, which latter agents are considered to be agents which, as a result of their chemical or mineralogical composition, correct a mixture, in particular a mixture of limestone and fly ash, so as to obtain the intended optimum composition and green strength in the granules. Thus, a correcting agent is added to the raw materials limestone and fly ash in step i) of the present method in order to obtain the desired chemical or mineralogical composition of the granules.

Preferably, the hot gases from the melting furnace are supplied to the cylindrical vertical heat exchanger, which hot gases move through the heat exchanger in counterflow with the package of granules moving in downward direction. Such a hot gas will dry, heat, decarbonate and ignite the components that are present in the granules. From a viewpoint of efficiency it is desirable to obtain the hot gases from the waste gases of the melting furnace in full or in part. It should be understood that the heat exchanger may also be heated by means of other energy sources, such as coal, usual fuels or natural gas.

In the present method is it is in particular important that the temperature in the cylindrical vertical heat exchanger be controlled so that sintering together of the granules supplied in accordance with step iii) is prevented and complete decarbonation is achieved. Such a temperature adjustment will effect a minor ceramic binding within the granules during their residence and movement through the heat exchanger, after which the granules are carried to the melting furnace, where they will react in a manner which is known per se.

Furthermore, the temperature at the bottom side of the cylindrical vertical heat exchanger is preferably about 1100-1300 °C and the temperature of the melting furnace is preferably about 1400-1550 °C.

In principle, two partial flows can be distinguished in the cylindrical vertical heat exchanger, viz. the granules being supplied at the upper side and the hot gases from the melting furnace being supplied at the bottom side. Due to the high temperatures of the gases from the melting furnace, the package of granules slowly moving through the cylindrical vertical heat exchanger will be heated by the hot gases being supplied in counterflow therewith. In order to support the flow of the hot gases in upward direction through the cylindrical vertical heat exchanger, a draught fan is preferably installed at the upper side of the cylindrical vertical heat exchanger. An additional advantage of the package of granules moving in downward direction through the cylindrical vertical heat exchanger is the fact that said package functions as a dust collector. Any fine residual substances can be collected at the upper side of the heat exchanger by conventional dust removing installations.

In a special embodiment it is desirable to use a shaft furnace as the cylindrical vertical heat exchanger and a melting furnace for the preparation of rock wool or glass wool as the melting furnace.

According to the present method, limestone, fly ash and any additives are already present in a desired proportion in the granules that have been formed, which has a positive effect on the chemical and physical processes that take place in the cylindrical vertical heat exchanger and the melting furnace.

In order to obtain a binder having excellent hydraulically binding properties, it is preferred to add an activator, for example a substance exhibiting an alkalic reaction, such as NaOH, Ca(OH)₂ and the like, as an additive in step vi). Another suitable additive to be added in step vi) is dried, natural pozzolan which has been pulverised to the dimension of cement.

The granules to be produced in accordance with the present method in particular vary only to a slight degree as regards their grain diameter, with a diameter of, for example, 1-2 cm being preferred, which granules may be obtained by the possible addition to the starting materials, viz, limestone, fly ash and any additives, of a component which is conducive towards the physical cohesion between the pulverised starting material components. The use of granules is in particular advantageous in order to prevent undesirable variation in the adjusted proportion of the elements upon entry in the melting furnace.

Although fly ash from coal-fired plants is consistently mentioned herein, it is also possible to use other residual substances, such as incinerator residues, other types of fly ash, purified steel grit, sewage sludge, sludge from sewage treatment plants, asbestos, metallic slags, dredged material and other substances containing impurities. In the preparation of the present slag having hydraulically binding properties it is furthermore important for the melt not to crystallise but to remain in its vitreous state, because crystallisation would lead to an unusable final product.

## Claims

1. A method for preparing a slag having hydraulically binding properties on the basis of a mixture comprising limestone, fly ash and any additives comprising the following steps: mixing the starting materials, supplying the mixture at the upper side of a cylindrical, vertical heat exchanger, supplying the fired product obtained at the bottom side of said cylindrical vertical heat exchanger to a melting furnace so as to obtain a melted product, quenching the melted product, and pulverising and mixing it with fly ash and any additives so as to obtain a binder, **characterized in that** the starting materials are mixed in the desired weight ratio whereafter the mixture thus obtained is granulated whilst adding a solid fuel, whereafter the granules comprising said solid fuel and starting materials are supplied to the vertical heat exchanger.

2. A method according to claim 1, **characterized in that** the hot gases from the melting furnace are supplied to the bottom side of said cylindrical vertical heat exchanger, which hot gases move through-the heat exchanger in counterflow with the package of granules moving in downward direction.

3. A method according to any one of the preceding claims, **characterized in that** the temperature in the cylindrical vertical heat exchanger is controlled so that sintering together of the granules supplied is prevented and complete decarbonation is achieved.

4. A method according to any one or more of the preceding claims, **characterized in that** the temperature of the melting furnace is higher than the temperature of the cylindrical vertical heat exchanger.

5. A method according to claim 4, **characterized in that** the temperature at the bottom side of the cylindrical vertical heat exchanger is about 1100-1300 °C and the temperature of the melting furnace is about 1400-1550 °C.

6. A method according to any one or more of the preceding claims, **characterized in that** a shaft furnace is used as said cylindrical vertical heat exchanger.

7. A method according to any one or more of the preceding claims, **characterized in that** a melting furnace for the preparation of rock wool or glass wool is used as said melting furnace.

8. A method according to any one or more of the preceding claims, **characterized in that** pulverized starting materials are used.

9. A method according to any one or more of the preceding claims, **characterized in that** the additive as used in mixing with slag comprises an activator.

10. A method according to any one of the preceding claims, **characterized in that** the additive as used in mixing with starting materials comprises a correction agent.

11. A method according to any one of the preceding claims, **characterized in that** the additive as used in mixing with slag is dried natural pozzolan, which has been pulverized to the dimension of cement.

12. A method according to any one or more of the preceding claims, **characterized in that** the granules vary only to a slight degree as regards their grain diameter, the diameter in particular being 1-2 cm.

## Patentansprüche

1. Verfahren zur Herstellung einer Schlacke mit hydraulischen Bindungseigenschaften auf der Grundlage eines Gemisches, umfassend Kalkstein, Flugasche und Additive, umfassend die folgenden Schritte: Vermischen der Ausgangsmaterialien, Zuführen des Gemischs zu dem oberen Teil eines zylindrischen, vertikalen Wärmetauschers, Zuführen des gebrannten Produkts, das in dem unteren Teil des zylindrischen, vertikalen Wärmetauschers erhalten wurde, in einen Schmelzofen, wobei ein geschmolzenes Produkt erhalten wird, Abschrecken des geschmolzenen Produkts und Pulverisieren und Vermischen desselben mit Flugasche und Additiven, wobei ein Bindemittel erhalten wird, **dadurch gekennzeichnet, dass** die Ausgangsmaterialien im gewünschten Gewichtsverhältnis vermischt werden, anschließend das so erhaltene Gemisch unter Zugabe eines festen Brennstoffs granuliert wird, und anschließend die den festen Brennstoff umfassenden Körnchen und die Ausgangsmaterialien dem vertikalen Wärmetauscher zugeführt werden.

2. Verfahren nach Anspruch 1, **dadurch gekennzeichnet, dass** die heißen Gase des Schmelzofens dem unteren Teil des zylindrischen, vertikalen Wärmetauschers zugeführt werden und die heißen Gase sich im Gegenstrom mit der Körnchenpackung nach unten durch den Wärmetauscher bewegen.

3. Verfahren nach einem der vorangehenden Ansprüche, **dadurch gekennzeichnet, dass** die Temperatur in dem zylindrischen, vertikalen Wärmetauscher derart kontrolliert wird, dass ein Aneinandersintern der zugeführten Körnchen verhindert und eine vollständige Decarbonisierung erreicht wird.

4. Verfahren nach einem oder mehreren der vorangehenden Ansprüche, **dadurch gekennzeichnet, dass** die Temperatur des Schmelzofens höher ist als die Temperatur des zylindrischen, vertikalen Wärmetauschers.

5. Verfahren nach Anspruch 4, **dadurch gekennzeichnet, dass** die Temperatur des unteren Teils des zylindrischen, vertikalen Wärmetauschers etwa 1100 bis 1300°C ist und die Temperatur des Schmelzofens etwa 1400 bis 1550°C ist.

6. Verfahren nach einem oder mehreren der vorangehenden Ansprüche, **dadurch gekennzeichnet, dass** als zylindrischer, vertikaler Wärmetauscher ein Schachtofen eingesetzt wird.

7. Verfahren nach einem oder mehreren der vorangehenden Ansprüche, **dadurch gekennzeichnet, dass** ein Schmelzofen zur Herstellung von Steinwolle oder Glaswolle als Schmelzofen eingesetzt wird.

8. Verfahren nach einem oder mehreren der vorangehenden Ansprüche, **dadurch gekennzeichnet, dass** pulverförmige Ausgangsmaterialien eingesetzt werden.

9. Verfahren nach einem oder mehreren der vorangehenden Ansprüche, **dadurch gekennzeichnet, dass** das Additiv, das im Gemisch mit der Schlacke verwendet wird, einen Aktivator umfasst.

10. Verfahren nach einem der vorangehenden Ansprüche, **dadurch gekennzeichnet, dass** das Additiv, das im Gemisch mit den Ausgangsmaterialien verwendet wird, ein Korrekturmittel umfasst.

11. Verfahren nach einem der vorangehenden Ansprüche, **dadurch gekennzeichnet, dass** das Additiv, das mit der Schlacke vermischt wird, getrocknete natürliche Puzzolanerde ist, welche auf die Größe von Zement vermahlen wurde.

12. Verfahren nach einem oder mehreren der vorangehenden Ansprüche, **dadurch gekennzeichnet, dass** die Körnchen nur in einem kleinen Ausmaß hinsichtlich ihrer Korndurchmesser variieren, wobei der Durchmesser insbesondere 1 bis 2 cm beträgt.

## Revendications

1. Procédé de production d'un laitier ayant des propriétés hydrauliques liantes, sur la base d'un mélange comprenant du calcaire, des cendres volantes et des additifs, comprenant les étapes consistant à : mélanger les matières premières, acheminer le mélange au niveau du côté supérieur d'un échangeur de chaleur cylindrique vertical, acheminer le produit chauffé obtenu au niveau du côté inférieur dudit échangeur de chaleur cylindrique vertical vers un four de fusion de manière à obtenir un produit fondu, refroidir le produit fondu et le pulvériser et le mélanger avec des cendres volantes et les additifs de manière à obtenir un liant, **caractérisé en ce que** les matières premières sont mélangées selon le rapport de poids souhaité, de sorte que le mélange ainsi obtenu est en granules tout en y ajoutant un combustible solide, de sorte que les granules comprenant ledit combustible solide et lesdites matières premières sont acheminés vers l'échangeur de chaleur vertical.

2. Procédé selon la revendication 1, **caractérisé en ce que** les gaz chauds en provenance du four de fusion sont acheminés vers le côté inférieur dudit échangeur de chaleur cylindrique vertical, lesquels gaz chauds se déplacent à travers l'échangeur de chaleur à contre-courant par rapport au paquet de granules se déplaçant vers le bas.

3. Procédé selon l'une quelconque des revendications précédentes, **caractérisé en ce que** la température dans l'échangeur de chaleur cylindrique vertical est contrôlée de manière à ce que le frittage des granules soit évité et qu'une décarbonatation totale soit atteinte.

4. Procédé selon l'une quelconque ou plusieurs des revendications précédentes, **caractérisé en ce que** la température du four de fusion est plus élevée que la température de l'échangeur de chaleur cylindrique vertical.

5. Procédé selon la revendication 4, **caractérisé en ce que** la température au niveau du côté inférieur de l'échangeur de chaleur cylindrique vertical est de 1100 à 1300°C environ et la température du four de fusion est de 1400 à 1550°C environ.

6. Procédé selon l'une quelconque ou plusieurs des revendications précédentes, **caractérisé en ce qu'**un four à cuve est utilisé en tant que ledit échangeur de chaleur cylindrique vertical.

7. Procédé selon l'une quelconque ou plusieurs des revendications précédentes, **caractérisé en ce qu'**un four de fusion destiné à la préparation de fibre de roche ou de fibre de verre est utilisé en tant que four de fusion.

8. Procédé selon l'une quelconque ou plusieurs des revendications précédentes, **caractérisé en ce que** des matières premières pulvérisées sont utilisées.

9. Procédé selon l'une quelconque ou plusieurs des revendications précédentes, **caractérisé en ce que** l'additif tel qu'il est utilisé dans le mélange avec le laitier comprend un agent activant.

10. Procédé selon l'une quelconque des revendications précédentes, **caractérisé en ce que** l'additif tel qu'il est utilisé dans le mélange avec les matières premières comprend un agent correcteur.

11. Procédé selon l'une quelconque des revendications précédentes, **caractérisé en ce que** l'additif tel qu'il est utilisé dans le mélange avec le laitier est de la pouzzolane naturelle séchée, qui a été pulvérisée à la taille du ciment.

12. Procédé selon l'une quelconque ou plusieurs des revendications précédentes, **caractérisé en ce que** les granules ne varient que dans une petite mesure en ce qui concerne leur diamètre de grain, le diamètre allant en particulier de 1 à 2 cm.
